# EUROPÄISCHE PATENTANMELDUNG

(11) **EP 2 778 144 A1**
(43) Veröffentlichungstag der Anmeldung: **17.09.2014**
(21) Anmeldenummer: 13158616.6
(22) Anmeldetag: 11.03.2013
(51) Int. Cl.: C03C 10/00, C04B 35/10, C04B 35/18, C04B 38/00

(54) **Keramisches Material**

(71) Anmelder: Keramik Holding AG Laufen, CH-4242 Laufen (CH)
(72) Erfinder: Die Erfindernennung liegt noch nicht vor
(74) Vertreter: Bohest AG

(57) **Zusammenfassung**

Eine zum Porösbrennen geeignete keramische Masse, umfassend nach dem Brennen SiO₂ 18-35 Gewichtsprozent, Al₂O₃ 54-76 Gewichtsprozent, Na₂O 0,5-2 Gewichtsprozent, K₂O 0,5-2 Gewichtsprozent, TiO₂ 0-4 Gewichtsprozent, Li₂O 0-7 Gewichtsprozent, CaO 0-1 Gewichtsprozent, MgO 0-5 Gewichtsprozent, Fe₂O₃ 0-2 Gewichtsprozent, B₂O₃ 0-6 Gewichtsprozent und BaO 0-4 Gewichtsprozent, bezogen auf die Masse nach dem Brennen. Die keramische Masse eignet sich zum Porösbrennen und zur Herstellung etwa von Sanitärartikeln, Kacheln oder Fliesen.

## Beschreibung

Die vorliegende Erfindung betrifft das Gebiet der keramischen Materialien zur Herstellung verschiedener Artikel wie Sanitärartikel, Geschirr und Baumaterialien.

Sanitärartikel werden im Allgemeinen entweder aus dichtbrennendem keramischen Material, sogenannter Vitreous-China (= porzellanartige Masse) mit einem Wasseraufnahmevermögen von ≤ 0,75% oder aus einer porösbrennenden keramischen Masse mit einem Wasseraufnahmevermögen von > 0,75% gebrannt. Dabei werden die dichtbrennenden Vitreous-China-Massen mit Wasseraufnahmevermögen ≤ 0,75% für Klosetts, Urinale und kleinere Artikel, die porösbrennenden Massen aufgrund ihrer geringeren Deformation und Schwindung beim Brennen für grössere masshaltige Artikel eingesetzt.

EP 0 584 977 A1 offenbart eine dichtbrennende Masse ("vitreous china"), die im gebrannten Zustand 25-70 Gewichtsprozent einer Glasphase und 75-30 Gewichtsprozent einer kristallinen Phase aufweist. Die Glasphase enthält als Hauptbestandteile 50-75 Gewichtsprozent SiO₂, 17-40 Gewichtsprozent Al₂O₃ und 4-12 Gewichtsprozent K₂O+Na₂O, bezogen auf die Glasphase; die kristalline Phase enthält als Hauptbestandteile 10-60 Gewichtsprozent α-Al₂O₃, 0-20 Gewichtsprozent Quarz und 2-20 Gewichtsprozent Mullit, bezogen auf die Gesamtmasse der dichtbrennenden Masse. Diese dichtbrennende Masse kann zu Sanitärartikeln verarbeitet werden.

US 6,242,117 B offenbart eine gebrannte keramische Masse, die im Scherben ("ceramic blank") 25-75 Gewichtsprozent einer Glasphase und 30-70 Gewichtsprozent einer Kristallphase aufweist. Die Glasphase enthält als Hauptbestandteile 50-80 Gewichtsprozent SiO₂ und 10-35 Gewichtsprozent Al₂O₃, bezogen auf die Glasphase; die Kristallphase enthält als Hauptbestandteile 10-60 Korund, 1-30 Gewichtsprozent Quarz und 1-30 Gewichtsprozent Mullit, bezogen auf die Kristallphase. Sanitärartikel wie Toilettenschüsseln, Urinale, Urinaltanks und Lavabos aus diesen Massen werden auch offenbart.

DE 101 45 537 A1 offenbart einerseits eine keramische Masse, die für das Dichtbrennen ("vitreous china") geeignet ist, und die nach dem Brand SiO₂ zu 42-59 Masse%, Al₂O₃ zu 35-52 Masse%, Na₂O zu 0,5-2 Masse%, K₂O zu 0,5-2 Masse% und TiO₂ zu 0,5-4 Masse% enthält. Sie offenbart andererseits eine keramische Masse, die für das Porösbrennen geeignet ist, und die nach dem Brand SiO₂ zu 50-65 Masse%, Al₂O₃ zu 30-50 Masse%, Na₂O zu 0,5-2 Masse%, K₂O zu 0,5-2 Masse%, MgO oder CaO zu je 0,5-4 Masse% und TiO₂ zu 0,5-2 Masse% enthält. Sie offenbart des Weiteren Sanitärartikel aus diesen gebrannten keramischen Massen.

Die vorliegende Erfindung setzt sich zum Ziel, eine verbesserte keramische Masse, die für das Porösbrennen zur Herstellung von u.A. Sanitärartikeln geeignet ist, bereitzustellen.

Die Erfindung stellt entsprechend bereit:
(1) Zum Porösbrennen geeignete keramische Masse, umfassend nach dem Brennen SiO₂ 18-35 Gewichtsprozent, Al₂O₃ 54-76 Gewichtsprozent, Na₂O 0,5-2 Gewichtsprozent, K₂O 0,5-2 Gewichtsprozent, TiO₂ 0-4 Gewichtsprozent, Li₂O 0-7 Gewichtsprozent, CaO 0-1 Gewichtsprozent, MgO 0-5 Gewichtsprozent, Fe₂O₃ 0-2 Gewichtsprozent, B₂O₃ 0-6 Gewichtsprozent und BaO 0-4 Gewichtsprozent, bezogen auf die Masse nach dem Brennen.
(2) Keramische Masse nach obigem (1), umfassend nach dem Brennen: SiO₂ 18-35 Gewichtsprozent, Al₂O₃ 54-76 Gewichtsprozent, Na₂O 0,5-2 Gewichtsprozent, K₂O 0,5-2 Gewichtsprozent, TiO₂ 0-0,01 Gewichtsprozent, Li₂O 0-0,01 Gewichtsprozent, CaO 0-0,01 Gewichtsprozent, MgO 0-0,01 Gewichtsprozent, Fe₂O₃ 0-0,01 Gewichtsprozent, B₂O₃ 0-0,01 Gewichtsprozent und BaO 0-0,01 Gewichtsprozent, bezogen auf die Masse nach dem Brennen.
(3) Keramische Masse nach obigem (1), umfassend nach dem Brennen: SiO₂ 18-35 Gewichtsprozent, Al₂O₃ 54-76 Gewichtsprozent, Na₂O 0,5-2 Gewichtsprozent, K₂O 0,5-2 Gewichtsprozent, TiO₂ 0,5-4 Gewichtsprozent, Li₂O 0,5-7 Gewichtsprozent, CaO 0,1-1 Gewichtsprozent, MgO 0,5-5 Gewichtsprozent, Fe₂O₃ 0,1-2 Gewichtsprozent, B₂O₃ 0,5-6 Gewichtsprozent und BaO 0,5-4 Gewichtsprozent, bezogen auf die Masse nach dem Brennen.
(4) Keramische Masse nach obigem (1), umfassend nach dem Brennen: SiO₂ 25-30 Gewichtsprozent, Al₂O₃ 60-70 Gewichtsprozent, Na₂O 0,5-1,5 Gewichtsprozent, K₂O 0,5-1,5 Gewichtsprozent, TiO₂ 0-1 Gewichtsprozent, Li₂O 0-0,01 Gewichtsprozent, CaO 0-0,5 Gewichtsprozent, MgO 0-0,02 Gewichtsprozent, Fe₂O₃ 0-0,5 Gewichtsprozent, B₂O₃ 0-0,01 Gewichtsprozent und BaO 0-0,01 Gewichtsprozent, bezogen auf die Masse nach dem Brennen.
(5) Keramische Masse nach obigem (1), umfassend nach dem Brennen: SiO₂ 26-29 Gewichtsprozent, Al₂O₃ 64-70 Gewichtsprozent, Na₂O 0,8-1,1 Gewichtsprozent, K₂O 0,8-1,1 Gewichtsprozent, TiO₂ 0,3-0,7 Gewichtsprozent, Li₂O 0-0,01 Gewichtsprozent, CaO 0,2-0,3 Gewichtsprozent, MgO 0-0,02 Gewichtsprozent, Fe₂O₃ 0,2-0,3 Gewichtsprozent, B₂O₃ 0-0,01 Gewichtsprozent und BaO 0-0,01 Gewichtsprozent, bezogen auf die Masse nach dem Brennen.
(6) Sanitärartikel, Tafelgeschirr oder Baumaterial, bestehend aus einer gebrannten keramischen Masse nach einem der obigen (1) bis (5).

Erfindungsgemäss wird vorgeschlagen, den Al₂O₃-Gehalt über den in den eingangs erwähnten Publikationen offenbarten Gehalt hinaus zu erhöhen und, damit einhergehend, den Gehalt an SiO₂ unter die dort offenbarten Gehalte zu senken.

Die erste Hauptkomponente der erfindungsgemässen Masse ist Aluminiumoxid Al₂O₃, genauer gesagt Aluminium-/Sauerstoffverbindungen, die über Röntgenfluoreszenz als "Al₂O₃" mengenmässig bestimmt werden können. Es kann als das kubische γ-Al₂O₃ (Tonerde) oder als das rhomboedrische (trigonale) α-Al₂O₃ (Korund, Saphir oder Rubin) eingesetzt werden. Es kann auch in Form von Rohstoffen, die hauptsächlich Al₂O₃ enthalten, eingesetzt werden. Beispiele hierfür sind Bauxit, aluminiumhaltiger Schiefer (unkalziniert oder kalziniert) und Andalusit (unkalziniert oder kalziniert). Der Al₂O₃-Gehalt in der erfindungsgemässen, gebrannten Masse beträgt 54-76 Gewichtsprozent, bevorzugt 60-70 Gewichtsprozent, besonders bevorzugt 64-70 Gewichtsprozent, bezogen auf die gebrannte Masse.

Die zweite Hauptkomponente der erfindungsgemässen Masse ist Siliziumdioxid SiO₂, genauer gesagt Silizium-/Sauerstoffverbindungen, die über Röntgenfluoreszenz als "SiO₂" mengenmässig bestimmt werden können. SiO₂ kann als Quarz oder Sand eingesetzt werden. Der SiO₂-Gehalt in der erfindungsgemässen, gebrannten Masse beträgt 18-35 Gewichtsprozent, bevorzugt 25-30 Gewichtsprozent, besonders bevorzugt 26-29 Gewichtsprozent, bezogen auf die gebrannte Masse.

Al₂O₃ und SiO₂ können auch zusammen in Form von Kaolin mit einem Zusatz von Al₂O₃ eingesetzt werden, um die erhöhten Al₂O₃-Gehalte in der erfindungsgemässen Masse zu erzielen. Bevorzugt betragen Al₂O₃- bzw. SiO₂-Gehalt 60-70 Gewichtsprozent bzw. 25-30 Gewichtsprozent, bezogen auf die gebrannte Masse. Besonders bevorzugt betragen Al₂O₃- bzw. SiO₂-Gehalt 64-70 Gewichtsprozent bzw. 26-29 Gewichtsprozent, bezogen auf die gebrannte Masse.

Die erfindungsgemässe Masse enthält im gebrannten Zustand Na₂O und K₂O als Flussmittel in Mengen von je 0,5-2 Gewichtsprozenten, bezogen auf die gebrannte Masse. Bevorzugt enthält die Masse Na₂O und K₂O in Mengen von je 0,5-1,5 Gewichtsprozenten, bezogen auf die gebrannte Masse. Gewünschtenfalls kann die Masse die weiteren Flussmittel CaO, Fe₂O₃, MgO, Li₂O, B₂O₃ und/oder BaO in Mengen von 0-1 bzw. 0-2 bzw. 0-5 bzw. 0-7 bzw. 0-6 bzw. 0-4 Gewichtsprozenten, bezogen auf die gebrannte Masse, enthalten. Wenn weitere Flussmittel CaO, Fe₂O₃, MgO, Li₂O, B₂O₃ und/oder BaO vorhanden sind, betragen ihre Mengen bevorzugt 0,1-1 bzw. 0,1-2 bzw. 0,5-5 bzw. 0,5-7 bzw. 0,5-6 bzw. 0,5-4 Gewichtsprozenten, bezogen auf die gebrannte Masse.

In einer bevorzugten Ausführungsform enthält die erfindungsgemässe Masse zusätzlich zu den oben erwähnten Na₂O und K₂Oeine Kombination aus 0,1-0,4 Gewichtsprozent CaO, 0,1-0,4 Gewichtsprozent Fe₂O₃ und höchstens 0,02 Gewichtsprozent MgO, bezogen auf die gebrannte Masse.

In einer besonders bevorzugten Ausführungsform enthält die erfindungsgemässe Masse als die Flussmittel eine Kombination von 0,8-1,1 Gewichtsprozent Na₂O, 0,8-1,1 Gewichtsprozent K₂O, 0,2-0,3 Gewichtsprozent CaO, 0,2-0,3 Gewichtsprozent Fe₂O₃ und höchstens 0,02 Gewichtsprozent MgO, bezogen auf die gebrannte Masse.

Wenn die weiteren optionalen Flussmittel CaO, Fe₂O₃, MgO, Li₂O, B₂O₃ und/oder BaO nicht explizit zugegeben werden, so betragen ihre Mengen bevorzugt je höchstens 0,01 Gewichtsprozent, bezogen auf die gebrannte Masse.

Die vorstehend und in den Ansprüchen angegebenen Mengenbereiche sind mit der Massgabe zu verstehen, dass die Summe der Mengen aller namentlich angegebenen Komponenten mindestens 98 Gewichtsprozent, bezogen auf die gebrannte Masse, ausmachen, wobei unvermeidbare Verunreinigungen und Wasser den Rest ausmachen. Eher bevorzugt ergibt die Summe der Mengen aller namentlich angegebenen Komponenten mindestens 99 Gewichtsprozent und besonders bevorzugt mindestens 99,5 Gewichtsprozent der gebrannten Masse.

Die mengenmässigen Anteile der in den Ansprüchen namentlich angegebenen Komponenten der erfindungsgemässen Masse werden über Röntgenfluoreszenzspektroskopie bestimmt. Diese liefert zunächst die Gehalte an den Metallen; diese werden dann in entsprechenden Mengen der am häufigsten vorkommenden Oxide ausgedrückt. Z.B. liefert die Röntgenfluoreszenzspektroskopie zunächst einen Gehalt an Aluminium, der dann in einen Mengenanteil des häufigsten Oxides "Al₂O₃" umgerechnet und angegeben wird. Sofern ein Anteil eines Oxides als "0 Gewichtsprozent" angegeben ist, wird das so verstanden, dass der Anteil kleiner ist als die Nachweisgrenze dieser Messmethode, die etwa 0,01 Gewichtsprozent ist.

Als "unvermeidbare Verunreinigungen" werden insbesondere andere Metalloxide, anorganische Phosphate, Carbonate und Sulfate, die als Verunreinigung in den Ausgangsoxiden vorkommen können, verstanden. Der Begriff "unvermeidbare Verunreinigungen" sollte so verstanden werden, dass die Art und Menge dieser Verunreinigung die Eigenschaften des gebrannten keramischen Materials nicht wesentlich beeinflusst. Vorzugsweise sind die Gehalte an solchen unvermeidbaren Verunreinigungen so klein wie möglich.

Zweckmässigerweise werden die Versätze der entwickelten Massen wie bisher im Schlickergussverfahren in porösen Gipsformen oder Kunststoffformen, mit oder ohne anliegendem Schlickerdruck verarbeitet, was trotz der deutlichen Änderung hinsichtlich der Zusammensetzung der jeweiligen Versätze zur Herstellung der jeweiligen Massen nach wie vor möglich ist.

Besonders zweckmässig ist es bei der Herstellung des Versatzes, eine möglichst feine Kornverteilung zu erreichen. Der Siebrückstand > 45 µm sollte < = 10%, vorzugsweise < = 6% sein, d. h. die verwendeten Oxide sollten möglichst fein gemahlen sein.

Die erfindungsgemässe keramische Masse lässt sich zur Herstellung verschiedener gebrannter keramischer Artikel verwenden. Bevorzugte Gruppen solcher Artikel sind Sanitärartikel (z.B. Lavabos, WC-Schüsseln, Bidets, Urinale, Ablagen und Accessoires wie etwa Seifenspender und WC-Bürstenhalter); Tafelgeschirr; und Baumaterialien (insbesondere Ziegel, Kacheln und Fliesen).

Die erfindungsgemässe keramische Masse wird bevorzugt bei einer Brenntemperatur der Masse im Freibrand bei 1150 bis 1280°C gebrannt, vorzugsweise während 1 bis 5 Stunden. Als die Gehalte "nach dem Brennen" wird im Rahmen der vorliegenden Anmeldung verstanden, dass die Gehalte nach einem Brennen bei 1200°C während 3 Stunden im Freibrand und nach Auskühlen auf Raumtemperatur unter Feuchtigkeitsausschluss bestimmt werden.

Generell kann das Zusammenmischen des Versatzes, das Giessen und das Brennen nach vorbekannten Verfahren, etwa aus den eingangs zitierten Publikationen, erfolgen.

Die so erhaltenen gebrannten erfindungsgemässen keramischen Massen erlauben Scherbenstärken von bis zu 4 mm herunter, währenddem bei den vorbekannten Massen die Scherbenstärken normalerweise nur etwa bis 8 mm herunter gehen. Es sind Kantenradien ab etwa 2 mm möglich; üblich waren bislang Kantenradien ab etwa 4 mm. Bei den erhaltenen Scherben sind scharfe filigrane Konturen gewährleistet. Bei weissen Scherben werden keine gelben Kanten beobachtet. Die erhaltenen Scherben zeichnen sich durch die folgenden typischen mechanischen Eigenschaften aus:
- Biegefestigkeit mindestens 110 MPa; Bestimmung nach DIN EN 843-1: 2008-08 (Vier-Punkt-Biegeanordnung).
- E-Modul grösser 80 GPa; G-Modul grösser 30 GPa und Poissonzahl µ grösser 0,25; Bestimmung E-Modul, G-Modul und Poissonzahl µ nach DIN 843-2:2007-3, Verfahren B.
- Wasseraufnahme des gebrannten Scherben kleiner gleich 10 Prozent; bestimmt nach der Kochmethode.

Die erfindungsgemässen keramischen Massen sind aufgrund der chemischen Zusammensetzung, des bevorzugten Brennverfahrens und des beobachteten Wasseraufnahme nach dem Brennen bovorzugt als porösbrennende Massen anzusehen. Sie weisen im gebrannten Zustand eine Wasseraufnahme im Bereich von 1 bis 10 Gewichtsprozenten, insbesondere von 4 bis 10 Gewichtsprozenten, bezogen auf die gebrannte Masse, auf.

In den nachfolgenden Tabelle 1 wird ein Ausführbeispiel der erfindungsgemässen porösgebrannten Masse mit ihrer chemischen Zusammensetzung angegeben.

**Tabelle 1: Chemische Zusammensetzung (Gewichtsprozente, bezogen auf die Masse nach dem Brennen)**

| Oxid | Gehalt in Gewichtsprozenten, bezogen auf die gebrannte Masse (gemessen mit Röntgenfluoreszenzspektroskopie) |
|---|---|
| SiO₂ | 27,81 |
| Al₂O₃ | 64,52 |
| Na₂O | 0,95 |
| K₂O | 0,91 |
| TiO₂ | 0,48 |
| Li₂O | < 0,01 |
| CaO | 0,17 |
| MgO | 0,95 |
| Fe₂O₃ | 0,30 |
| B₂O₃ | < 0,01 |
| BaO | < 0,01 |

## Patentansprüche

1. Zum Porösbrennen geeignete keramische Masse, umfassend nach dem Brennen:
SiO₂ 18-35 Gewichtsprozent,
Al₂O₃ 54-76 Gewichtsprozent,
Na₂O 0,5-2 Gewichtsprozent,
K₂O 0,5-2 Gewichtsprozent,
TiO₂ 0-4 Gewichtsprozent,
Li₂O 0-7 Gewichtsprozent,
CaO 0-1 Gewichtsprozent,
MgO 0-5 Gewichtsprozent,
Fe₂O₃ 0-2 Gewichtsprozent,
B₂O₃ 0-6 Gewichtsprozent und
BaO 0-4 Gewichtsprozent,
bezogen auf die Masse nach dem Brennen.

2. Keramische Masse nach Anspruch 1, umfassend nach dem Brennen:
SiO₂ 18-35 Gewichtsprozent,
Al₂O₃ 54-76 Gewichtsprozent,
Na₂O 0,5-2 Gewichtsprozent,
K₂O 0,5-2 Gewichtsprozent,
TiO₂ 0-0,01 Gewichtsprozent,
Li₂O 0-0,01 Gewichtsprozent,
CaO 0-0,01 Gewichtsprozent,
MgO 0-0,01 Gewichtsprozent,
Fe₂O₃ 0-0,01 Gewichtsprozent,
B₂O₃ 0-0,01 Gewichtsprozent und
BaO 0-0,01 Gewichtsprozent,
bezogen auf die Masse nach dem Brennen.

3. Keramische Masse nach Anspruch 1, umfassend nach dem Brennen:
SiO₂ 18-35 Gewichtsprozent,
Al₂O₃ 54-76 Gewichtsprozent,
Na₂O 0,5-2 Gewichtsprozent,
K₂O 0,5-2 Gewichtsprozent,
TiO₂ 0,5-4 Gewichtsprozent,
Li₂O 0,5-7 Gewichtsprozent,
CaO 0,1-1 Gewichtsprozent,
MgO 0,5-5 Gewichtsprozent,
Fe₂O₃ 0,1-2 Gewichtsprozent,
B₂O₃ 0,5-6 Gewichtsprozent und
BaO 0,5-4 Gewichtsprozent,
bezogen auf die Masse nach dem Brennen.

4. Keramische Masse nach Anspruch 1, umfassend nach dem Brennen:
SiO₂ 25-30 Gewichtsprozent,
Al₂O₃ 60-70 Gewichtsprozent,
Na₂O 0,5-1,5 Gewichtsprozent,
K₂O 0,5-1,5 Gewichtsprozent,
TiO₂ 0-1 Gewichtsprozent,
Li₂O 0-0,01 Gewichtsprozent,
CaO 0-0,5 Gewichtsprozent,
MgO 0-0,02 Gewichtsprozent,
Fe₂O₃ 0-0,5 Gewichtsprozent,
B₂O₃ 0-0,01 Gewichtsprozent und
BaO 0-0,01 Gewichtsprozent,
bezogen auf die Masse nach dem Brennen.

5. Keramische Masse nach Anspruch 1, umfassend nach dem Brennen:
SiO₂ 26-29 Gewichtsprozent,
Al₂O₃ 64-70 Gewichtsprozent,
Na₂O 0,8-1,1 Gewichtsprozent,
K₂O 0,8-1,1 Gewichtsprozent,
TiO₂ 0,3-0,7 Gewichtsprozent,
Li₂O 0-0,01 Gewichtsprozent,
CaO 0,2-0,3 Gewichtsprozent,
MgO 0-0,02 Gewichtsprozent,
Fe₂O₃ 0,2-0,3 Gewichtsprozent,
B₂O₃ 0-0,01 Gewichtsprozent und
BaO0-0,01 Gewichtsprozent,
bezogen auf die Masse nach dem Brennen.

6. Sanitärartikel, Tafelgeschirr oder Baumaterial, bestehend aus einer gebrannten keramischen Masse nach einem der Ansprüche 1 bis 5.
